Europäisches Patentamt

European Patent Office

Office européen des brevets

(11) Veröffentlichungsnummer: **0 281 882**
**A2**

## (12) EUROPÄISCHE PATENTANMELDUNG

(21) Anmeldenummer: 88102976.3

(22) Anmeldetag: 29.02.88

(51) Int. Cl.⁴ **B32B 31/30** , **B29C 67/18** , **B29C 47/06** , **B29C 47/02**

(30) Priorität: 13.03.87 DE 3708122

(43) Veröffentlichungstag der Anmeldung:
14.09.88 Patentblatt 88/37

(84) Benannte Vertragsstaaten:
AT CH DE ES FR GB IT LI NL

(71) Anmelder: **Baus, Heinz Georg**
**Wartbodenstrasse 35**
**CH-3626 Hünibach-Thun(CH)**

(72) Erfinder: **Baus, Heinz Georg**
**Wartbodenstrasse 35**
**CH-3626 Hünibach-Thun(CH)**

(74) Vertreter: **Klose, Hans, Dipl.-Phys. et al**
**Kurfürstenstrasse 32**
**D-6700 Ludwigshafen(DE)**

(54) **Verfahren und Vorrichtung zur Herstellung von Mehrschichtplatten.**

(57) In einem Verfahren zur Herstellung von Mehrschichtplatten aus extrudierbarem Kunststoff werden zwei Bahnen (12, 14) aus Kunststoff aus Extrudern einer Walzenanordnung (22) zugeführt und unter Einschluß von Material miteinander verbunden. Es soll die Aufgabe gelöst werden, beim Einführen des Materials vorgebbare Muster und Strukturen zu erzeugen. Es wird vorgeschlagen, daß als Material Fäden (18) einzeln und unabhängig voneinander in den Spalt (64) der Walzenanordnung (22) eingeführt werden und daß diese Fäden (18) mittels Führungsmitteln (19) untereinander und bezüglich des Spaltes (64) ausgerichtet werden.

FIG. 1

EP 0 281 882 A2

## Verfahren und Vorrichtung zur Herstellung von Mehrschichtplatten

Die Erfindung bezieht sich auf ein Verfahren zur Herstellung von Mehrschichtplatten aus extrudierbarem Kunststoff, bei welchem Verfahren zwei mittels Extrudern, insbesondere mit Breitschlitzdüsen, gelieferte Bahnen aus Kunststoff unter Einschluß von Material mittels einer Walzenanordnung miteinander verbunden werden. Ferner bezieht sich die Erfindung auf eine Vorrichtung zur Durchführung eines derartigen Verfahrens.

Aus der US-PS 44 48 739 ist ein derartiges Verfahren sowie ein Vorrichtung zur Durchführung desselben nachgewiesen, wobei eine einzige Walzenglättmaschine vorgesehen ist, zu deren beiden Seiten jeweils einer der beiden Extruder angeordnet ist. Das Material vor dem Eintritt in den ersten Spalt auf eine der Walzen der Walzenanordnung über einen vorgegebenen Winkelbereich aufgelegt, um dann gemeinsam mit der ersten Bahn in den Spalt der Walzenanordnung eingeführt zu werden. Hinter diesem ersten Spalt der Walzenanordnung erfolgt eine Fixierung des textilen Materials auf der Oberfläche der ersten Bahn und erst in einem weiteren Spalt wird die weitere Bahn der Walzenglättmaschine zugeführt. Das Material ist als Stoff oder Gewebe ausgebildet, das auf einer Rolle aufgewickelt ist und bei der Herstellung der Mehrschichtbahnen bzw. -platten der Walzenanordnung dann zugeführt wird. Aufgrund der Stoff-oder Gewebebindung weisen die Fäden, nämlich Schuß- und Kettfäden, eine vorgegebene räumliche Zuordnung zueinander auf und die in das textile Material eingewebte Muster oder Strukturen werden nach dem Einbringen zwischen die Kunststoffbahnen in den derartig aus transparentem Kunststoff hergestellten Platten für einen Betrachter von außen sichtbar. Es müssen vorgefertigte Muster und Strukturen akzeptiert werden und bei der Herstellung der Mehrschichtplatten kann kein Einfluß auf die Relativlage der einzelnen Fäden des textilen Materials genommen werden.

Aus der DE-OS 22 00 594 ist ein Verfahren zur Herstellung von Formlingen nachgewiesen. Hierbei wird zwischen zwei thermoplastischen Kunststoffbahnen eine Glasmatte oder auch lose einzelne Glasfasern eingebracht. Ferner können zwei Glasmatten, von welchen wenigstens eine zuvor mit einem thermoplastischen Harz imprägniert wurde, mittels Walzen und unter Einwirkung von Wärme miteinander verbunden werden. Die nach diesem Verfahren hergestellten und mit Glasfasern verstärkten Bogen werden bei einer bestimmten Temperatur einer Formgebungsvorrichtung zugeführt, um nach entsprechender Verformung den gewünschten Formling zu erhalten. Die Glasfasern dienen zur Verstärkung des Formlinges und sind unregelmäßig, ohne irgendeine Vorzugsrichtung, in den Kunststoff eingebettet. Die Glasfasern weisen vergleichsweise kleine Längen auf ohne eine regelmäßige oder gar vorgegebene geometrische Zuordnung zueinander zu besitzen.

Der Erfindung liegt die Aufgabe zugrunde, das Verfahren sowie die zur Durchführung des Verfahrens vorgesehene Vorrichtung dahingehend weiterzubilden, daß mit geringem Aufwand die Relativlage von Fäden des textilen Materials vorgegeben und/oder variiert werden kann. Es sollen in einfacher Weise Streifenstrukturen erzeugt werden können, wobei die geometrische Anordnung, also Größe, Breite und Abstand von sichtbaren Streifen vorgegeben werden soll. Das Verfahren soll in einfacher Weise durchführbar sein, wobei im wesentlichen bekannte Maschinen und Anlagenteile zum Einsatz gelangen sollen. Ferner soll zur Durchführungg des Verfahrens ein geringer Steuer- und Regelaufwand erforderlich sein, wobei auch eine schnelle und zuverlässige Anpassung und Einstellung der verschiedenen Anlagenteile gegeben sein soll. Ferner soll das Verfahren die Herstellung derartiger Mehrschichtplatten mit Streifenmustern auch in großen Stückzahlen und in hoher Funktionssicherheit ermöglichen und den betrieblichen Einsatzbedingungen und Gegebenheiten gewachsen sein. Die Vorrichtung soll eine hohe Funktionssicherheit aufweisen und bei einfacher Bedienung eine kostengünstige Herstellung der Mehrschichtplatten auch in hohen Stückzahlen ermöglichen. Die Ausbildung und Vorgabe von Streifenmustern oder Streifenstrukturen soll mit geringem Fertigungsaufwand ermöglicht werden.

Zur Lösung dieser Aufgabe wird vorgeschlagen, daß als Material einzelne, voneinander unabhängige und lange Fäden von einer Rolle abgewickelt werden, daß diese Fäden Führungsmitteln zugeführt werden, mittels welchen die Abstände der einzelnen Fäden untereinander quer zur Transportrichtung vorgebbar sind, und daß die Fäden parallel zueinander ausgerichtet der Walzenanordnung zugeführt werden.

Das erfindungsgemäße Verfahren ermöglicht, die Relativlage der einzelnen Fäden zueinander und innerhalb der Platte den Erfordernissen entsprechend vorzugeben, ohne daß hierzu vorgefertigte Gewebe, Stoffe oder dergleichen mit bestimmten Strukturen, Mustern oder Ornamenten benötigt werden. Mittels den Führungsmitteln kann der Abstand der Fäden, und zwar quer zur Längsrichtung bzw. Förderrichtung von Extruder und Fäden verändert werden, so daß problemlos sehr unterschiedliche Streifenstrukturen in der fertigen Platte erzeugt werden können. So können beispielsweise einzelne Fäden in Gruppen zusammengefaßt sein, in welchen diese Fäden relativ nahe beieinanderliegen, wobei auch problemos der Abstand zur entsprechenden Fadengruppen verändert und vorgegeben werden kann. Die Anzahl der Fäden pro Gruppe oder bezogen auf die Breite kann selbstverständlich ebenfalls vorgegeben werden. Die Führungsmittel ermöglichen in überraschend einfacher Weise die gezielte Einflußnahme auf die Anordnung der Fäden zwischen die Bahnen, ohne daß zuvor in einem separaten Verfahren, wie Weben, Wirken, Stricken oder ähnliches ein Muster wie bei einem Stoff oder ähnlichem vorgegeben wird. In ein und demselben Herstellverfahren wird das Streifenmuster und gleichzeitig auch die Platte erzeugt. Die auf einer Rolle, Haspel oder dergleichen aufgewickelten Fäden werden im Rahmen dieser Erfindung separat über die Führungsmittel in den Spalt der Walzenanordnung eingeführt, wobei diese Fäden zwecks Erzielung eines gewünschten Designs die unterschiedlichsten Farben aufweisen können. Der Durchmesser der einzelnen Fäden liegt im Rahmen dieser Erfindung im Bereich zwischen 0,1 bis 0,5 mm, wobei ein Fadendurchmesser von 0,3 mm sich als zweckmäßig erwiesen hat. Aufgrund dieses kleinen Durchmessers wird eine Kapilarwirkung der einzelnen Fäden praktisch unterbunden, zumal das noch plastische Material der Bahnen in die Fäden eindringen kann. Dies ist vor allem beim Einsatz der fertigen Platten in Naßräumen, insbesondere in Duschtrennwänden, wichtig, um das Eindringen von Feuchtigkeit einschließlich Krankheitserregern und Pilzen zu unterbinden, um so den Anforderungen an die Hygiene gerecht zu werden. Pro 10 cm Breite der Platte lassen sich ohne Schwierigkeiten zwischen 80 und 150 Fäden vorsehen, die sämtlich parallel zueinander in der gleichen Tiefe, und zwar erfindungsgemäß in der Mitte der Platte, liegen und zweckmäßig zu Gruppen in der Weise zusammengefaßt sind, daß Streifen mit mehreren nebeneinanderliegenden Fäden abwechselnd zu Streifen ohne Fäden in der Platte vorhanden sind. Sowohl die Breite als auch die Dichte bzw. der seitliche Abstand der Streifen bzw. Fadengruppen kann mit den Führungsmitteln ebenso vorgegeben werden wie der freie Abstand zwischen den einzelnen Fäden bzw. Fadengruppen.

Mit den Führungsmitteln wird die Relativlage der Fäden quer zur Transportrichtung sowie zum Einzugsspalt in die Walzenanordnung vorgegeben, so daß erfindungsgemäß reproduzierbare Streifenmuster erzeugt werden. Die Führungsmittel enthalten zweckmäßig einstellbare Schablonen zwecks Vorgabe der Ausrichtung. Diese Schablonen können während des Betriebes quer zur Längs- bzw. Transportrichtung in einem vorgebbaren Takt oder in einer bestimmten Frequenz entsprechend der Einzugsgeschwindigkeit bewegt werden, um wellenförmige Streifenmuster zu erzeugen. Ferner können im Rahmen der Erfindung mehrere, unabhängig voneinander, einstellbare und verstellbare Schablonen vorgesehen sein, um einerseits zur Längsrichtung parallele Fäden und ferner auch wellenförmige Streifenstrukturen zu erzeugen. Die Schablonen sind zweckmäßig kammartig ausgebildet, um die Produktionsvorbereitung und die Handhabung bei der Inbetriebnahme zu erleichtern. Diese kammartigen Schablonen weisen auf einer quer zur Förderichtung ausgerichteten Leiste hierzu im wesentlichen senkrecht ausgerichtete Stege auf, wobei zwischen diesen Stegen die einzelnen Fäden eingelegt werden können. Die erfindungsgemäß kammartig ausgebildeten Schablonen können von den Fäden abgehoben und von diesen so weit entfernt werden, daß bei Produktionsbeginn das Einführen der einzelnen Fäden in den Spalt der Walzenanordnung in einfacher Weise vorgenommen werden kann. Erfindungsgemäß werden die Führungsmittel erst nach dem Einführen der Fäden in den Spalt der Walzenanordnung zur exakten Ausrichtung der Fäden auf diese Fäden zubewegt, wobei die einzelnen Fäden jeweils in die Lücken zwischen den Stegen der kammartigen Schablone gelangen. Die Fäden müssen also nicht durch Löcher oder Ausnehmungen bei der Produktionsvorbereitung eingefädelt werden, sondern die Fäden werden einfach in der gewünschten Weise in die freien Zonen zwischen den Stegen eingelegt. Zweckmäßig werden in Transportrichtung möglichst nahe hintereinander zwei derartige kammartige Schablonen vorgesehen, wobei die Stege der genannten Schablonen die entgegengesetzten Richtungen aufweisen.

In einer wesentlichen Weiterbildung werden in die aus den Mehrschichtbahnen auf Maß geschnittenen Mehrschichtplatten von der einen Seite der Oberfläche her Vertiefungen eingebracht. Diese Platten weisen dann eine umlaufende Vertiefung, und zwar zweckmäßig an den Längsrändern sowie an den Querrändern der jeweiligen Platte auf. Diese umlaufende Vertiefung wird durch Warmverformung und/oder Tiefziehen der zunächst ebenen Platte hergestellt. Damit die in Längsrichtung verlaufenden Fäden in den Bereichen der Vertiefung, welche quer zur Längsrichtung liegen, bei der Verformung nicht an die eine Oberfläche gedrückt werden, weisen die Vertiefungen quer zur Längsrichtung eine geringere Tiefe auf als die parallel zur Längsrichtung liegenden Bereiche der Vertiefung. Mittels einer derartigen Vertiefung kann die Stabilität der fertigen Platte nicht unwesentlich verbessert werden.

Die Erfindung wird nachfolgend anhand der Zeichnungen näher erläutert. Es zeigen:

Fig. 1 eine Prinzipdarstellung einer Vorrichtung zur Durchführung des Verfahrens,

Fig. 2 eine Aufsicht auf die Führungsmittel in Blickrichtung II gemäß Fig. 1,

Fig. 3 eine Ansicht der kammartigen Verstellschablone in Blickrichtung III gemäß Fig. 2,

Fig. 4 schematisch einen Schnitt durch eine nach dem Verfahren gefertigte Platte.

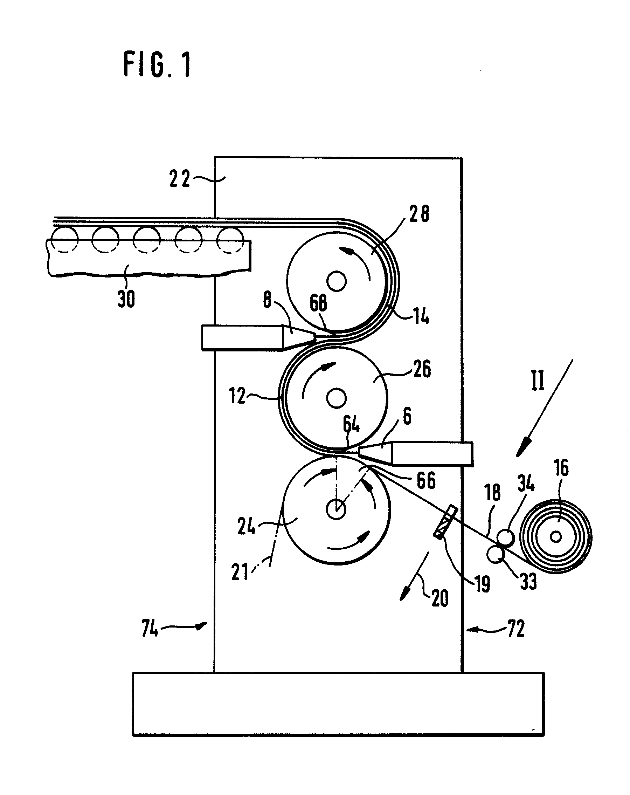

Fig. 1 zeigt eine zur Durchführung des Verfahrens ausgebildete Vorrichtung, welche als Walzenanordnung eine Walzenglättmaschine 22 mit drei Walzen 24, 26, 28 aufweist und als Drei-Walzen-Kalander bezeichnet werden kann. Von den Extrudern sind die Breitschlitzdüsen 6, 8 schematisch angedeutet und es ist ersichtlich, daß die dazugehörenden Extruder jeweils auf der einen bzw. anderen Seite 72 bzw. 74 der Walzenglättmaschine 22 angeordnet sind. Die Düsen 6, 8 sind in unmittelbarerer Nähe der Walzenspalte 64, 68 derart angeordnet, daß die beiden Bahnen 12, 14 unmittelbar diesen Spalten der Walzenglättmaschine zuführbar sind. Gemeinsam mit der ersten Bahn 12 werden die Fäden 18, wie nachfolgend noch zu erläutern ist, dem ersten Spalt 64 zugeführt. Auf einer Rolle 16 sind die Fäden 18 in der Weise aufgewickelt, daß jeder Faden einzeln spiralartig auf der Rolle 16 aufgewikkelt ist und separat über die Führungsmittel 19 in den Spalt 64 einführbar ist. Die Führungsmittel 19 enthalten Bohrungen oder Ausnehmungen, durch welche die Fäden 18 hindurchgeführt sind. In Blickrichtung senkrecht zur Zeichenebene ist eine Vielzahl von spiralartig auf die Rolle 16 aufgewickelten Fäden vorhanden. Die erfindungsgemäß zum Einsatz gelangenden Fäden weisen einen Durchmesser von 0,1 bis 0,5 mm auf, wobei ein Durchmesser von 0,3 mm sich als zweckmäßig erwiesen hat. Auf der Rolle 16 liegen die Faden-Spiralen dicht nebeneinander und stützen sich gegenseitig ab; lediglich aus Gründen der Übersichtlichkeit sind in Fig. 1 die Fäden nicht unmittelbar nebeneinander dargestellt. Im Rahmen dieser Erfindung können zwischen den einzelnen Faden-Spiralen, oder auch Gruppen derselben, Abstandsscheiben vorgesehen sein, wodurch das Aufwickeln der Fäden auf die Rollen 16 erleichtert sowie das Zusammenrutschen von benachbarten Fäden unterbunden wird.

Die Fäden 18 liegen vor dem Eintritt in den Spalt 64 auf der unteren Walze 24 in einem vorgegebenen Winkelbereich 66 auf, um eine zuverlässige Ausrichtung der Fäden beim Eintritt in den Spalt 64 zu gewährleisten. Die aus der Breitschlitzdüse 6 gelieferte erste Bahn 12 umschlingt zusammen mit den Fäden 18 die mittlere Walze 26 über einen Winkelbereich von etwa 180°C, wobei eine gewisse Abkühlung dieser Bahn 12 erfolgt. Hierdurch wird eine hinreichende Fixierung der einzelnen Fäden auf der Bahn 12 sichergestellt. Vor der Produktionsaufnahme können die Führungsmittel 19 in Richtung des Pfeiles 20 nach unten wegbewegt werden. Mit der strichpunktierten Linie 21 ist der Anfang eines Fadens angedeutet. Vor der Produktionsaufnahme werden die einzelnen Fäden durch den Spalt 64 hindurchgezogen und hängen auf der anderen Seite der Walze 66 herunter. Auf diese Weise werden sämtliche einzelnen langen Fäden durch den Spalt 64 hindurchgeführt. Danach werden die Führungsmittel 19 entgegen der Richtung des Pfeiles 20 in die dargestellte Position gebracht. Hierbei werden auch die einzelnen Fäden entsprechend der Ausbildung der Führungsmittel in der Richtung senkrecht zur Zeichenebene zueinander exakt ausgerichtet.

Zur Produktionsaufnahme wird die Walzenanordnung angefahren und aus der unteren Breitschlitzdüse 6 die Kunststoffbahn 12 gefördert; hierbei werden die auf der Oberfläche der unteren Walze 66 aufliegenden einzelnen Fäden 18, von der weichen Kunststoffbahn mitgenommen und nach oben zum zweiten Spalt 68 gefördert. Aufgrund der erfindungsgemäß vorgeschlagenen Anordnung der Führungsmittel 19 sowie das Einbringen der Anfänge 21 der Fäden in den Walzenspalt 64 vor der Produktionsaufnahme wird in zuverlässiger Weise und praktisch ohne Materialverschwendung und Ausschuß die Produktionsaufnahme durchführbar. In Transportrichtung ist zwischen der Rolle 16 und dem Führungsmittel 19 ein Paar Führungsrollen 33, 34 angeordnet, mit welchen eine definierte Vorgabe der Transportrichtung sowie der Ausrichtung der einzelnen Fäden 18 bezüglich der Führungsmittel 19 sichergestellt wird, und zwar unabhängig von dem jeweiligen Durchmesser der noch auf der Rolle 16 aufgewickelten Faden-Spiralen. Die Führungsmittel 19 können daher kammartig mit nach einer Seite hin offenen Stegen ausgebildet sein, so daß das Einführen der einzelnen Fäden in die Führungsmittel 19 problemlos erfolgen kann.

In den zweiten Spalt 68 wird schließlich die zweite Bahn 14 eingeführt, wobei aufgrund der genannten Vorfixierung der Fäden 18 ein unerwünschtes Einpressen in die noch vergleichsweise warme Bahn 14 vermieden wird. Da die beiden Breitschlitzdüsen 6, 8 sowie die zugeordneten Extruder auf den beiden Seiten 72 bzw. 74 angeordnet sind, weist die gesamte Vorrichtung eine relativ geringe Bauhöhe auf. Die Breitschlitzdüsen 6, 8 und ebenso die Führungsmittel 19 sind ohne weiteres zugänglich, wobei die Führungsmittel problemlos eingestellt bzw. verstellt werden können. Für die Anordnung und auch die Bedienung der Führungsmittel steht ein hinreichend großer Platz zur Verfügung. Die Rolle 16 kann im Rahmen der Erfindung ohne weiteres noch tiefer oder in einem größeren Abstand zu der Walzenanordnung 22 aufgestellt werden. Mit den Führungsmitteln 19 wird sowohl die relative Lage der einzelnen Fäden zueinander als auch der Auflage-Winkelbereich 66 vorgegeben.

Die dargestellte Walzenanordnung sowie die erläuterte Zufuhr der beiden Bahnen hat sich zwar als besonders zweckmäßig erwiesen, doch können im Rahmen dieser Erfindung auch andere Walzenanordnungen vorgesehen sein. Maßgebend ist das Einführen in den einen Walzenspalt von einzelnen Fäden, die unabhängig voneinander geliefert werden und mittels den Führungsmitteln in der erforderlichen Weise ausgerichtet werden. In Kombination mit der Walzenanordnung wird insgesamt mit geringem apparativem Aufwand die Möglichkeit geschaffen, die einzelnen Fäden bei hoher Betriebssicherheit des Herstellverfahrens zwischen die beiden Bahnen aus einem extrudierbarem Kunststoff einzubringen und mit diesen zu verbinden.

Auf der der Walzenanordnung 22 nachgeordneten Rollbahn 30 erfolgt eine Abkühlung der Bahn, welche dann mit geeigneten Schneidwerkzeugen auf die gewünschte Plattengröße geschnit ten wird. Die Breite der Mehrschicht-Bahn ist insbesondere zwischen 1,5 und 2 m groß, während in der Transportrichtung 32 im Endlosverfahren gefertigt wird. Selbstverständlich sind durch die Länge der Fäden 18 insoweit Grenzen gegeben, wobei als Fadenlänge sich 10 000 Meter als zweckmäßig und praktikabel erwiesen haben. Hinter der Rollbahn 30 wird die Bahn quer zur Transportrichtung auf Maß geschnitten, um so die Platten in der gewünschten Größe zu erhalten. Im Rahmen dieser Erfindung werden in die derart erzeugten Mehrschicht-Platten Vertiefungen, Wellen, Strukturen oder dergleichen eingebracht. Wesentlich ist hierbei, daß die quer zur Transportrichtung 32, welche mit der Fadenrichtung in der fertigen Platten im wesentlichen übereinstimmt, die Vertiefungen nur eine solche Tiefe aufweisen, daß beim Tiefziehen, Warmverformen oder dergleichen die Fäden noch im Inneren der Platte verbleiben und nicht die Oberfläche durchdringen. Im Bereich der Vertiefung erfolgt nämlich eine gewisse Strekkung des Plattenmaterials und durch entsprechende Vorgabe der Tiefe wird sichergestellt, daß die Fäden nicht vollständig aus der Platte herausgedrückt werden. Die parallel zur Transportrichtung liegenden Bereiche der Vertiefungen können hingegen eine wesentlich größere Tiefe aufweisen, da auch bei einer Warmverformung aufgrund fehlender Zugspannungen in Längsrichtung der Fäden nicht deren Heraustreten zu befürchten ist.

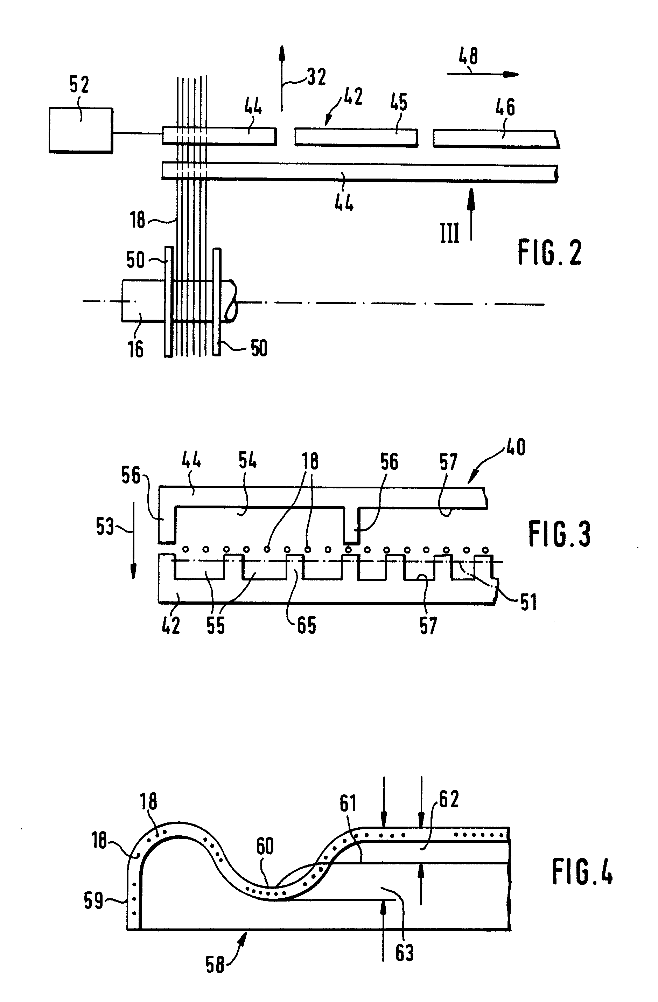

Fig. 2 zeigt schematisch und vergrößert in einer Aufsicht die Führungsmittel 19, welche kammähnliche Schablonen enthalten. Es sind hier zwei Schablonen 40, 42 in Transportrichtung 32 hintereinander angeordnet, wobei die Schablone 42 aus mehreren Segmenten 44, 45, 46 besteht. Die beiden Schablonen 40, 42 können quer zur Transportrichtung, und zwar sowohl in Richtung des Pfeiles 48 als auch senkrecht zur Zeichenebene eingestellt bzw. verstellt werden. Entsprechend der Einstellung der Schablonen 40, 42 wird der Abstand der einzelnen Fäden 18 in der durch den Pfeil angegebenen Richtung 48 vorgegeben. Ferner wird durch Einstellung der Verstelleinrichtung 19 senkrecht zur Zeichenebene der oben erläuterte Auflage-Winkelbereich auf der ersten Walze der Walzenanordnung definiert. Die Fäden 18 sind auf der Rolle 16 als Spiralen aufgewickelt, wobei anfangs eine Fadenlänge von 10 000 Metern vorhanden ist. Die Spiralen der einzelnen Fäden liegen dicht beieinander, wobei mittels Stütz-oder Abstandsscheiben 50 eine gute Ausrichtung auf der Rolle 16 sichergestellt wird.

Zur Verstellung der Segmente 44 bis 46 quer zur Transportrichtung, und zwar entsprechend dem Pfeil 48 ist erfindungsgemäß eine Verstelleinrichtung 52 mit einem Antriebsmotor vorgesehen, welche während des Betriebes eines oder auch mehrerer der Segmente in Richtung des Pfeiles 48 hin-und herbewegt. Diese Bewegung ist synchronisiert mit der Drehzahl der Walzenanordnung, so daß definierte wellenförmige Streifenmuster erzeugt werden.

Fig. 3 zeigt vergrößert in Transportrichtung eine Ansicht der Schablonen 40, 42, und zwar vor Beginn der Produktion. Zuvor wurden die einzelnen Fäden zwischen die kammartigen Schablonen 40, 42 eingeführt. Die Schablonen 40, 42 weisen gegeneinander gerichtete Stege 56 bzw. 65 auf. Da die Schablonen 40, 42 in Richtung des Pfeiles 53 auseinandergefahren sind, konnte das Einlegen der Fäden ohne Schwierigkeiten erfolgen. Um eine bestimmte Streifenstruktur zu erhalten, können nach dem Zufahren der beiden Schablonen 40, 42 die zunächst gleichmäßig in der Ausnehmung 54 befindlichen Fäden 18 in die kleineren Ausnehmungen 55 der Schablone 42 eingeführt sein. In dem zusammengefahrenen Zustand der beiden Schablonen liegen die Innenflächen 57 der Schablonen 40 bzw. 42 nahe beieinander; in diesem Zustand befindet sich beispielsweise die Innenfläche 57 in der durch die strichpunktierte Linie 51 angedeuteten Position hinter der Schablone 40. Die Schablone 40 enthält Stege 56, die nach unten zur anderen Schablone 42 weisen. Die Schablone 42 weist hingegen nach oben zur anderen Schablone 40 gerichtete Stege 65 auf. Die beiden Schablonen 40, 42 sind in Transportrichtung 32 erfindungsgemäß hintereinander angeordnet und die Stege 56 bzw. 65 weisen jeweils in entgegengesetzte Richtung. Die Fäden 18 werden folglich in zusammengefahrenen Zustand der beiden Schablonen quasi von allen Seiten zuverlässig geführt, während im auseinandergefahrenen Zustand die Fäden 18 problemlos zwischen die Schablonen eingebracht werden können. Es ist ersichtlich, daß enstprechend der Anordnung der Ausnehmungen 54, 55 problemlos die Führung der einzelnen Fäden 18 vorgegeben werden kann, um entsprechende Streifenmuster in der Bahn bzw. Platte zu erhalten. Sowohl der Abstand der einzelnen Fäden zueinander als auch die Zusammenfassung von Fäden zu Gruppen, die ihrerseits voneinander beabstandet sind, wird mittels der Schablonen vorgegeben.

Fig. 4 zeigt einen Schnitt durch eine erfindungsgemäße hergestellte Platte, welche nach Verlassen der obengenannte Rollbahn einer weiteren Verformung unterzogen wurde. Im Tiefziehverfahren oder einem vergleichbaren Formgebungsverfahren wurde in die zunächst ebene und auf das Maß zurechtschnittene Platte 58 sowohl ein seitlicher Rand 59 als auch eine Vertiefung 60 eingebracht. Der hier sichtbare Teil der Vertiefung 60 liegt parallel zu den Fäden 18 während der hinter der Zeichenebene befindliche Teil 61 der Vertiefung quer zur Längsrichtung der Fäden 18 verläuft. Die erfindungsgemäße Vertiefung ist umlaufend im Bereich des Randes 59 vorgesehen. Sowohl der hinter der Zeichnung liegende Teil 61 als auch der vor der Zeichenebe befindliche Teil der Vertiefung 60 weisen eine geringere Tiefe 62 auf als die Tiefe 63 des hier geschnittenen Teiles der Vertiefung 60. Die Tiefe 62 wird erfindungsgemäß in der Weise vorgegeben, daß bei der Verformung, welche regelmäßig unter Wärmeeinwirkung stattfindet, die Fäden 18 nicht an die Oberfläche der Vertiefung gebracht werden. Die in Längsrichtung verlaufenden Teile der Vertiefung 60 können hingegen tiefer ausgebildet werden, da dort ein Herausdrücken der Fäden beim Verformen nicht zu befürchten ist.

Bezugszeichenliste

6, 8 Düse
12, 14 Bahn
16 Rolle
18 Faden
19 Führungsmittel
20 Pfeil
21 Fadenanfang
22 Walzenanordnung
24, 26, 28 Walze
30 Rollbahn
32 Transportrichtung
33, 34 Führungsrollen
40, 42 Schablone
44 bis 46 Segment
48 Pfeil
50 Abstandsscheibe
51 Linie

52 Verstelleinrichtung
53 Pfeil
54, 55 Ausnehmung
56 Steg
57 Innenfläche
58 Platte
59 Rand
60 Vertiefung
61 Teil von 60
62, 63 Tiefe
64, 68 Spalt
65 Steg
66 Winkelbereich
70, 72 Seite

## Ansprüche

1. Verfahren zur Herstellung von Mehrschichtplatten aus extrudierbarem Kunststoff, bei welchem Verfahren zwei mittels Extrudern, insbesondere mit Breitschlitzdüsen, gelieferte Bahnen aus Kunststoff unter Einschluß von Material mittels einer Walzenanordnung miteinander verbunden werden, dadurch gekennzeichnet,
daß als Material einzelne, voneinander unabhängige und lange Fäden (18) von einer Rolle (16) abgewickelt werden,
daß diese Fäden (18) Führungsmitteln (19) zugeführt werden, mittels welchen die Abstände der Fäden (18) untereinander, quer zur Transportrichtung (32) vorgebbar sind,
und daß die Fäden (18) parallel zueinander ausgerichtet der Walzenanordnung (22) zugeführt werden.

2. Verfahren nach Anspruch 1, dadurch gekennzeichnet, daß die Fäden (18) spiralförmig in Scheiben auf der Rolle (16) aufgewickelt sind und durch die Führungsmittel (19) hindurch zu dem Spalt (64) der Walzenanordnung (22) geführt werden, wobei benachbarte Scheiben auf der Rolle (16) direkt nebeneinander liegen.

3. Verfahren nach Anspruch 1 oder 2, dadurch gekennzeichnet, daß die Führungsmittel (19) quer zur Transportrichtung (32) in der Weise einstellbar und/oder verstellbar sind, daß die Abstände der einzelnen Fäden (18) zueinander vorgebbar sind, wobei insbesondere eine Anzahl von Fäden jeweils in Gruppen zusammengefaßt wird.

4. Verfahren nach einem der Ansprüche 1 bis 3, dadurch gekennzeichnet, daß die Führungsmittel (19) kammartig ausgebildete Schablonen (40, 42) mit gegeneinander weisenden Stegen (56, 65) aufweisen, und/oder daß Segmente (44 bis 46) derselben unabhängig voneinander einstellbar sind.

5. Verfahren nach einem der Ansprüche 1 bis 4, dadurch gekennzeichnet, daß die der Verstelleinrichtung (19) zugeordneten Schablonen (42, 44) und/oder deren Segmente (44 bis 46) während der Herstellung unabhängig voneinander mittels Antriebsmitteln (52) in einer Richtung (48) quer zur Transportrichtung (32) verstellbar sind.

6. Verfahren nach einem der Ansprüche 1 bis 5, dadurch gekennzeichnet, daß die Führungsmittel (19) Ausnehmungen (54, 55) aufweisen, die insbesondere zwischen den Stegen (56, 65) der kammartig ausgebildeten Schablonen (40, 42) angeordnet sind, wobei die Fäden (18) im auseinandergefahrenen Zustand der Schablonen (40, 42) zwischen diese einführbar sind, und/oder daß die in Transportrichtung hintereinander angeordneten Schablonen im zusammengefahrenen Zustand die Fäden (18) von allen Seiten ringsum führen.

7. Verfahren nach einem der Ansprüche 1 bis 6, dadurch gekennzeichnet, daß nach dem Durchfahren der Walzenanordnung (22) aus der derart hergestellten Bahn mittels Schneidwerkzeugen Mehrschichtplatten geschnitten werden und daß in diese Platten in der Nähe des Randes eine zweckmäßig über den gesamten Umfang des Randes verlaufende Vertiefung (60) eingebracht wird, und zwar insbesondere durch Tiefziehen oder ein vergleichbares Verfahren der Warmverformung.

8. Verfahren nach Anspruch 7, dadurch gekennzeichnet, daß die im wesentlichen quer zur Längsrichtung der Fäden (18) verlaufenden Teile der Vertiefung (60) mit einer geringeren Tiefe (62) eingebracht werden als die Teile, die im wesentlichen parallel zu den Fäden (18) verlaufen.

9. Verfahren nach einem der Ansprüche 1 bis 8, dadurch gekennzeichnet, daß der Rand (59) im wesentlichen unter einem rechten Winkel zur Plattenoberfläche gebogen wird und/oder in der gleichen Richtung wie die Vertiefung (16) von der im übrigen im wesentlichen ebenen Oberfläche der Platte weggerichtet angeordnet wird.

10. Vorrichtung zur Durchführung des Verfahrens nach einem der Ansprüche 1 bis 9, dadurch gekennzeichnet, daß die Führungsmittel (19) in Transportrichtung (32) wenigstens zwei hintereinander angeordnete Schablonen (40, 42) aufweisen und/ oder daß die Schablonen (40, 42) kammartig ausgebildet sind und einander entgegengerichtete Stege (56, 65) aufweisen, wobei die Fäden (18) in Ausnehmungen (54, 55) zwischen den Stegen (56, 65) geführt sind.

11. Vorrichtung nach Anspruch 10, dadurch gekennzeichnet, daß wenigstens eine der Schablonen (40, 42) und/oder deren Segmente (44 bis 46) mittels einer Verstelleinrichtung (52) quer zur Transportrichtung (32) verstellbar ist.

12. Vorrichtung nach einem der Ansprüche 10 oder 11, dadurch gekennzeichnet, daß die Fäden (18) spiralförmig als Scheiben auf der Rolle (16) dicht nebeneinander angeordnet sind und/oder daß zwecks Stabilisierung der Scheiben mit den spiralförmig aufgewickelten Fäden (18) in Abständen auf der Rolle (16) Abstandsscheiben (50) angeordnet sind.

FIG. 1

FIG.2

FIG.3

FIG.4